Europäisches Patentamt

European Patent Office

Office européen des brevets

(11) Publication number: **0 124 845**
**B1**

(12) **EUROPEAN PATENT SPECIFICATION**

(45) Date of publication of patent specification: **31.08.88**

(21) Application number: **84104837.4**

(22) Date of filing: **02.05.84**

(51) Int. Cl.⁴: **B 23 Q 1/02, B 23 Q 37/00**

(54) **Device for positioning an machining unit relatively to a workpiece, in particular for transfer lines.**

(30) Priority: **10.05.83 IT 341983**

(43) Date of publication of application:
**14.11.84 Bulletin 84/46**

(45) Publication of the grant of the patent:
**31.08.88 Bulletin 88/35**

(84) Designated Contracting States:
**CH DE FR GB LI**

(56) References cited:
**EP-A-0 078 496**
**CH-A- 449 430**
**DE-A-2 150 947**
**DE-A-2 908 605**
**DE-C- 87 142**
**FR-A-1 049 775**
**FR-A-1 421 458**
**FR-A-2 159 777**
**FR-A-2 410 535**
**GB-A- 397 781**
**US-A-2 222 819**

(73) Proprietor: **I.M.F. Industria Macchine Faenza S.P.A.**
**Via Provinciale Granarolo, 143**
**I-48018 Faenza (Ravenna) (IT)**

(72) Inventor: **Ferruzzi, Claudio**
**Via San Giovanni di Formellino, 11**
**I-48018 Faenza Ravenna (IT)**

(74) Representative: **Modiano, Guido et al**
**MODIANO, JOSIF, PISANTY & STAUB Modiano & Associati Via Meravigli, 16**
**I-20123 Milan (IT)**

Courier Press, Leamington Spa, England.

## Description

This invention relates to a device for positioning a machining unit relatively to a workpiece, in particular for transfer lines.

It is known that on so-called transfer lines, a workpiece is caused to advance from one working station to the next to undergo preset machining at each station.

The biggest problem encountered with transfer lines is related to its adaptation for machining workpieces which are different from those machined previously, especially when the orientation and arrangement of the machining units relatively to the workpiece required to be changed.

The engineering expense involved is such that it is often preferred to set up a new transfer line. This expense is further aggravated by the need for adjusting the working travels of the machining units to carry out milling, planing, drilling, and the like operations as planned.

From a constructional standpoint, prior devices have also proved to be somewhat complex and bulky, which reflects adversely on the whole plant.

DE—C—87142 discloses a machine wherein a series of devices is provided, each of which comprises a guide extending according to a substantially C-like pattern and carrying a machining unit holder. However the support of this holder permits only a reduced number of adjustments and therefore of operations. GB—A—397781 also discloses a holder for a machining tool. The holder may be positioned along a curved guide, which, being a structural element of the machine tool, is not exchangeably mounted.

In view of the foregoing, the purpose of this invention is to provide a device for positioning machining units, which can carry out the position adjustment operations for the latter easier, while having a simple construction for its performance and moderate space requirements, such that a number of such devices may be packed in a small volume.

This purpose is attained by the invention as defined in claim 1.

Further details and advantages of this invention will be more readily understood from the following description of a preferred embodiment thereof, with reference to the accompanying illustrative drawings, where:

Figure 1 is an elevation view of that portion of this device which pertains to the C-like guide;

Figure 2 is a plan view of the guide shown in Figure 1;

Figure 3 is a sectional plan view of the guide of Figure 1, taken on the horizontal plane III—III and showing, in dash-and-dot lines, the construction of a holder movable along it;

Figure 4 is a top plan view of the machining unit holder;

Figure 5 is a sectional view of the holder of Figure 4, taken along the line V—V;

Figure 6 is a view, taken in the same direction as Figure 5, with details shown partly in section for clarity of illustration;

Figure 7 is a view of this holder taken in the direction VII—VII of Figure 6; and

Figure 8 is a front view of this holder.

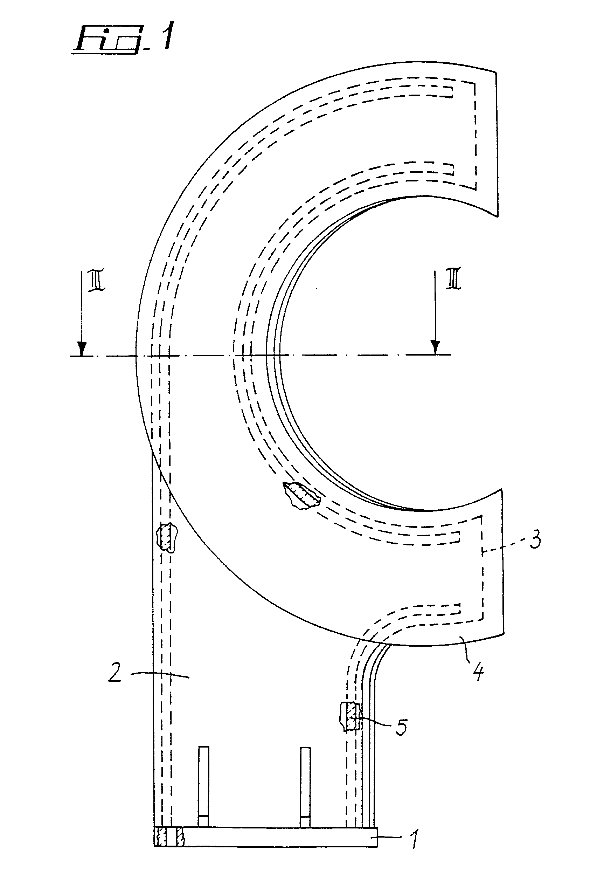

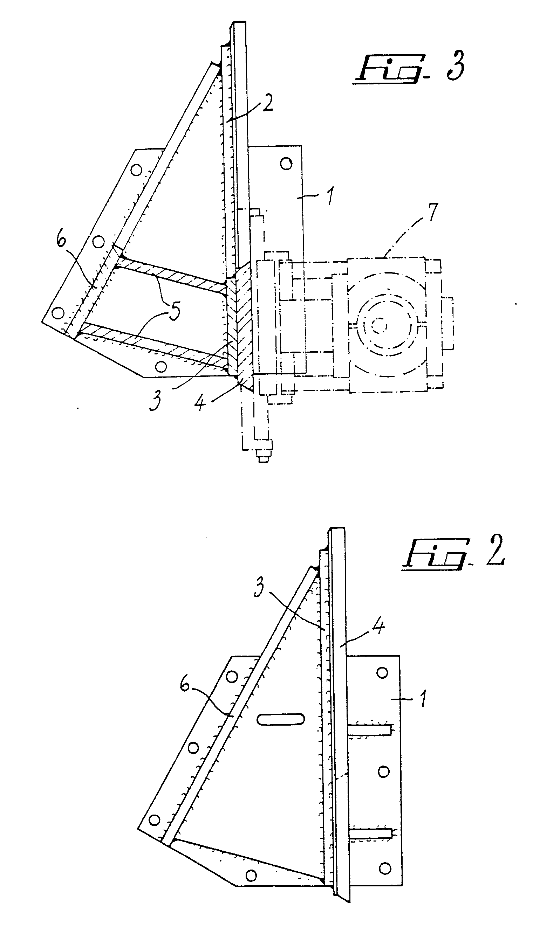

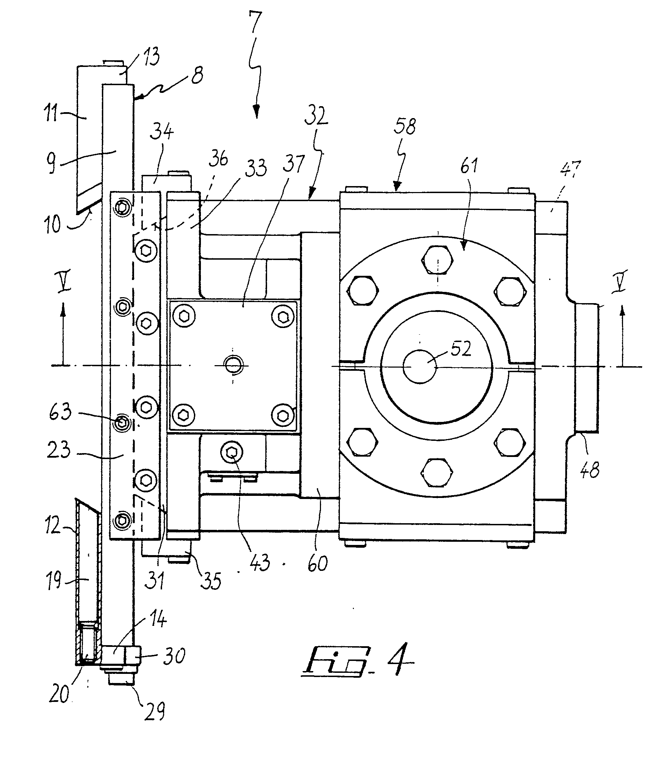

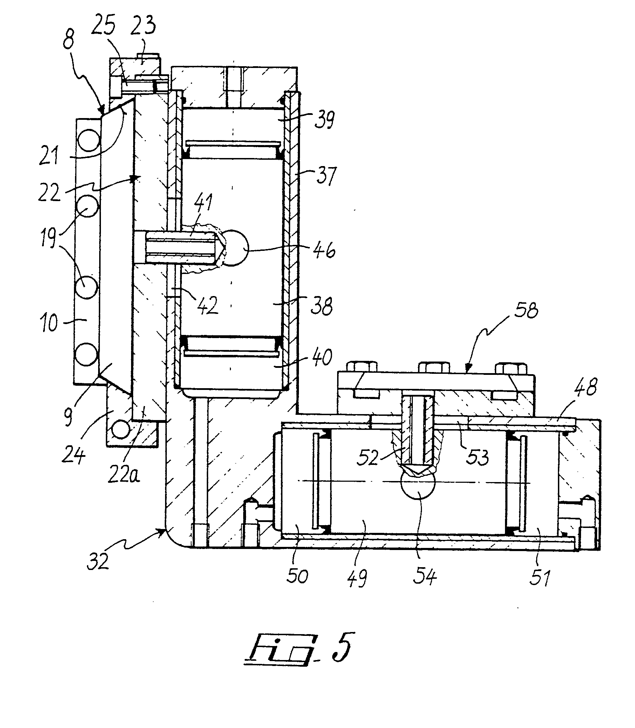

Making reference to Figures 1 to 3, this holder comprises a base plate 1 adapted to be secured by means of bolts to a platform, not shown in the drawings.

Welded to the plate 1 is an abutment 2 lying in a vertical plane and having an upper portion 3 substantially configured as an arc of a circle.

Rigidly attached to a side face of the portion 3 is a guide 4 extending on a curved line, for example an arc of circle over more than a semicircle into a configuration, hereinafter called C-like, with a dove-tail cross-section. Although not shown, the guide 4 could also have an elongate portion, for example at the middle of the C.

To strengthen the abutment 2, welded to the opposite face thereof to that carrying the guide 4, are stiffening ribs 5 which connect the abutment 2 to a buttress 6 arranged, with respect to the abutment 2, to form an acute angle therewith.

In practice, a columnar sector-like structure which enables a number of such structures to be positioned concentrically around a working area where a rotary turret carrying the workpiece clamping vices is provided. Each workpiece is clamped in a respective vice such that the working area is located at the center of the guide 4. A holder, indicated as a whole at 7, may be positioned on the guide 4, for receiving a machining unit for carrying out a specific machining operation on the workpiece.

In the exempary embodiment shown, the holder 7 comprises a number of mutually movable and adjustable parts to permit the machining unit to be displaced with several degrees of freedom.

In fact, the holder 7 comprises a first slide means 8 including a rectilinear tenon 9 with dovetail cross-section, normally whereto is a groove 10, also with dovetail cross-section and a curvilinear pattern which forms the mortice for the guide 4.

The lateral sides of the groove 10 are formed of two segments 11 and 12 the outer edges whereof have abutment pieces 13, 14 arranged to abut against the opposed ends of the tenon 9. The segments 11, 12 are fastened to the tenon 9 by two sets of screws, 15, 16 and 17, 18, each. By engaging the guide 4 in the groove 10, the slide 8 may be positioned to form a desired angle with a horizontal plane.

The first slide means 8 is secured along the guide 4 by means of a set of pins 19 received in holes of the segments 11, 12 and being adapted to project out of the segment 12 which defines the outer side of the groove 10 by the provision of respective set screws 20. By acting on the set screws 20, the pins 19 are pressed against the guide 4 which, accordingly, is locked against the opposite inner side of the groove 10.

The tenon 9 of the first slide means 8 engages slidably in a seating 21 of complementary cross-section which is formed in a second slide means 22 by a pair of angle strips 23 and 24 secured to opposed edges of a plate 22a by means of double rows of screws, 25 and 26.

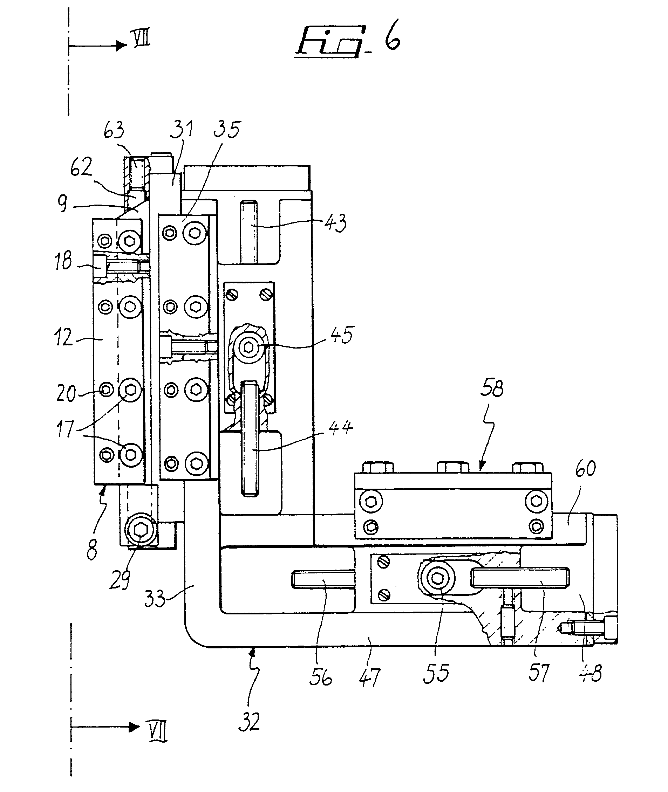

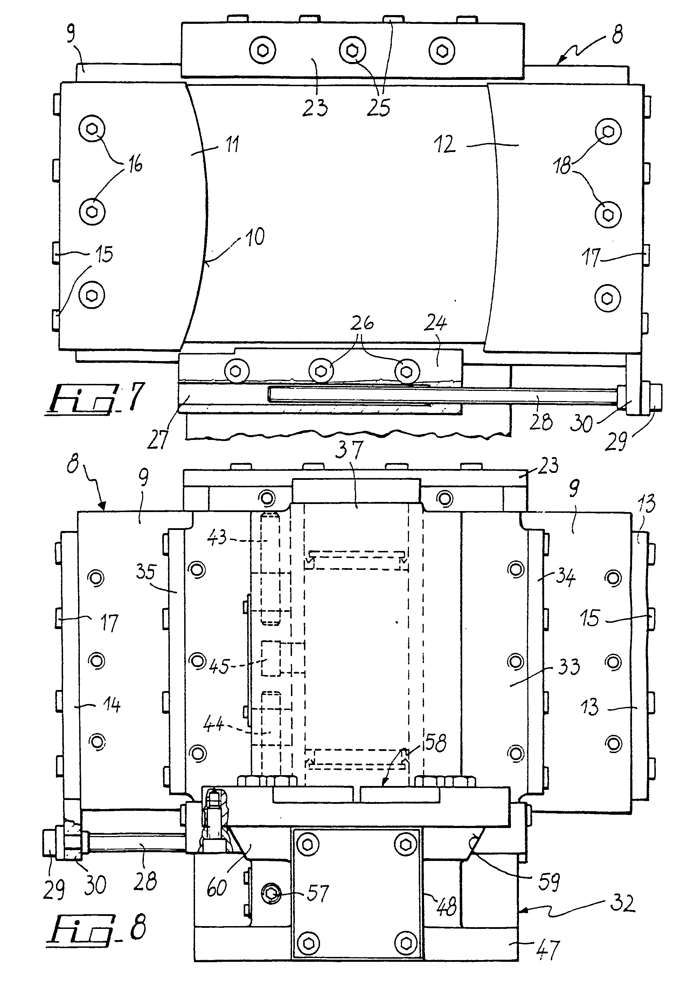

A bore 27 is formed through the lower strip 24 (Figures 5 and 7) for receiving a threaded rod 28 engaging a threaded portion of the bore 27. The rod 28 has a head 29 which is retained axially, but allowed to rotate freely in a lug of the slide 8. Rotation of the rod 28 causes the slide means 22 to move along the tenon 9 of the slide 8, and hence relatively to the C-like guide 4.

The plate 22a has, on the opposite face to that adjoining the first slide means 8, a tenon 31 (Figures 4 and 6) which extends orthogonally to the tenon 9. A bracket 32 of substantially squared configuration is guided on the tenon 31.

The bracket 32 comprises a wall 33 which, at two opposed edges thereof, carries two strips 34, 35, rigid to the bracket and defining a seating 36 for the sliding movement of the tenon 31.

Formed at the middle of the wall 33 is a cylinder 37 (Figure 5) of a hydraulic jack having its axis parallel to the tenon 31. Sealingly guided within the cylinder 37 is a piston 38 dividing the cylinder interior into two chambers 39, 40 which are connected to a hydraulic system.

The piston 38 is held stationary relatively to the second slide means 22 by a peg 41, the opposed ends whereof are inserted into the plate 22a and the piston 38, respectively. The peg 41 is passed through an elongated slot 42 in the cylinder, having a major dimension in the jack axial direction.

It may be appreciated from the foregoing that, when a pressurized fluid is delivered into either of the two chambers 39, 40, and owing to the piston 38 being held stationary relatively to the second slide means 22, the bracket 32 will be caused to move along the tenon 31.

To adjust the travel distance of the bracket 32 along the tenon 31 two travel limit stops are provided which comprise two threaded rods 43, 44 (Figures 4, 6 and 8) and are threaded into ribs external to the cylinder 37 in aligned relationship.

Interposed between the juxtaposed ends of the rods 43, 44 is a roller 45 mounted to one end of a pin 46 which protrudes radially out of the piston 38 and is offset angularly by 90° with respect to the peg 41.

The pin 46 is passed through the wall of the cylinder 37 at a further slot, not shown in the drawings but quite similar to the slot 42 which allows the peg 41 to stand out of the cylinder.

The bracket 32 comprises a surface 47 extending perpendicularly to the wall 33 and accommodating a cylinder 48 of a further hydraulic jack having its axis orthogonal to the cylinder 37. Slidable in sealed relationship within the cylinder 48 is a piston 49 which defines two chambers 50, 51 connected to the hydraulic system.

Radially rigid with the piston 49 is a peg 52 which projects from the cylinder 48 upwards through an elongate slot 53 in the direction of the first jack axis (Figure 5).

Also rigidly attached to the piston 49 is a pin 54 which is located angularly 90° away from the peg 52 and projects outwards through a further slot in the cylinder 48. Mounted on the outward end of the pin 54 is a roller 55 which can move between two travel limit stops 56, 57 (Figure 6) formed of two threaded rods which are threaded into outer ribs on the cylinder 48.

In practice, therefore, travel between piston 49 and cylinder 48 is controlled in exactly the same way as described hereinabove in connection with references 41—46.

The peg 52 is inserted from below through a carriage 58 having the machining unit, not shown, mounted thereon. The carriage 58 has a dovetail cross-section groove 59 (Figure 8) for sliding engagement with a tenon 60 attached to the cylinder 48, spaced apart from the surface 47 and extending, of course, in the direction of the cylinder axis.

The carriage 58 would be equipped to fit the characteristics of the machining unit. In the embodiment shown, for example, a circular guide 61 (Figure 4) is provided to permit the operational unit to be rotated on the carriage 58 to an angularly adjustable position relatively to the C-like guide 4.

The device just described operates as follows.

After placing the machining unit onto the carriage 58, its position relative to a workpiece is adjusted in accordance with the intended machining operation. The sequence of effectuation of the adjustments will be selected contingent on requirements. As an example, one may first adjust the orientation of the machining unit by changing the angular position of the holder 7 along the guide 4.

To this aim, after loosening the pins 19 (Figure 4), the holder is moved along the C-like guide 4 up to the desired angle, thereafter the pins 19 are again secured.

In order to move the machining unit from and to the workpiece, the threaded rod 28 is operated to displace the slide 22 slidably along the tenon 9. To prevent the stresses imposed on the machining unit from being transferred onto the threaded rod 28, it is contemplated that the tenon 9 be locked in the groove 21 by means of additional pins 62 (see Figure 6) which are guided in holes provided through the strips 23, 24 and tightened against the sides of the tenon 9 by set screws 63.

On completion of the above preliminary steps for positioning and orienting the machining unit relative to the workpiece, the operations involved in adjusting the lengths of the machining travel distances are completed. In this way the machining unit may execute machining operations along x-, y- and z-axes of movement. In fact since the means for moving a tool toward and into the workpiece are usually incorporated in the machining unit, any machining operations which require the tool to be shifted sideways are carried out by actuating the hydraulic jacks 37—38 and 48—49.

Actuation of the jack 37—38 will thus produce a displacement of the bracket 32 along the tenon 31, whereas the actuation of the jack 48—49 will produce a displacement of the carriage 58 along the tenon 60. The length of such displacement movements is set by adjusting the travel limit stops 43—44 and 56—57; it may be appreciated that adjustment of the travel limit stops will be related to a specific machining operation to be performed on the workpiece.

As may be seen, the foregoing device affords a number of advantages. In particular, the C-like configuration of the guide 4 allows the machining unit to be oriented conveniently in order to be able to machine the workpiece both from above and below.

From a constructional standpoint, the expedient of incorporating the cylinders 37 and 48 to the structure of the bracket 32 has proved advantageous. In fact, this has allowed a more compact construction for the holder, while significantly decreasing the space requirements of the transfer line and affording advanced automation.

A modified embodiment of the invention provides an additional slide, associated with the slide 22 and effective to ensure a higher order of freedom for adjusting the bracket relatively to the C-like guide.

## Claims

1. A tool-supporting device exchangeably mountable on a machine tool to position a power machining unit relative to a workpiece comprising a support member (2, 3) presenting a guide (4) extending at least partially along a curved profile and a holder (7) for the machining unit slidably located on said guide for positioning along said curved profile, characterized in that the guiding profile of said guide (4) is a circular arc extending over the circumference of more than a semicircle and that said holder (7) comprises a first slide member (8) having a groove (10) forming a mortice slidably engaged with said guide (4) and having a tenon (9) perpendicular to said groove (10) and radial to said guide (4), a second slide member (22) slidably engaged on said tenon (9) of said first slide member (8) and itself having a tenon (31) perpendicular to the tenon (9) of said first slide member (8) and tangential to a given arc concentric to the circular profile of the arcuate guide (4), and a right-angled bracket (32), a first arm of which is slidably mounted on the tenon (31) of the second slide member (22) so that the second arm (47) adapted to support the machining unit extends perpendicularly to the arcuate guide (4) and also to the sliding direction of the second slide member (22).

2. A device according to claim 1, characterized in that the first arm (33) of said right-angled bracket (32) accommodates a cylinder (37) of a hydraulic jack extending with the axis thereof parallel to the axis of the tenon (31) of said second slide member (22), said cylinder including a piston (38) sealingly guided therein to divide suid cylinder into two chambers (39, 40) connected to a hydraulic system said piston being held stationary relatively to said second slide member by a peg (41) the opposed ends thereof being attached respectively to said piston and said second slide, said peg being passed through an elongated slot (42) in said cylinder extending in the axial direction of said cylinder.

3. A device according to Claim 2, characterized in that the second arm (47) of said right-angle bracket (32) incorporates a cylinder (48) of a further hydraulic jack wherein a piston (49) is slidable in sealed relationship, said piston defining two chambers (50, 51) connected to a hydraulic system, said piston having radially attached thereto a peg (52) projecting outwards from said cylinder through a slot (53) in the latter, a carriage (58) supporting the operational unit being associated with said peg.

4. A device according to Claim 3, characterized in that in order to set the travel distance of said bracket (32) relatively to said second slide member (22), and of said carriage (58) relative to said surface (47), travel limit stops are provided each comprising a pair of threaded rods (43, 44; 56, 57) engaged in external ribs to said cylinders (37, 48), a roller (45, 55) being situated between adjoining ends of said rods and mounted at the end of a pin (46, 54) projecting radially from the piston of the respective cylinder.

5. A device according to claim 3, characterized in that said machining unit supporting carriage (58) has a dovetail cross-section guide (61) extending in a circle.

## Patentansprüche

1. Eine Werkzeugträger-Vorrichtung, die auswechselbar auf einer Werkzeugmaschine zur Positionierung einer angetriebenen Bearbeitungswerkzeugeinheit relativ zu einem Werkstück angeordnet ist und die ein Tragelement (2, 3) enthält mit einer Führung (4), die sich zumindest teilweise längs eines gekrümmten Profiles erstreckt und einen Halter (7) für die Bearbeitungseinheit, die verschieblich an der Führung für die Positionierung längs des gekrümmten Profiles angeordnet ist, dadurch gekennzeichnet, daß das Führungsprofil der Führung (4) ein Kreisbogen ist, der sich über mehr als eine Halbkreislänge erstreckt und, daß der Halter (7) ein erstes Gleitelement (8) mit einer Auskehlung (10) aufweist, die eine Nut, verschieblich in Eingriff mit der Führung (4) stehend, bildet und die einen Vorsprung (9) aufweist, der senkrecht zur Auskehlung (10) und radial zur Führung (4) steht und, daß der Halter (7) ein zweites Gleitelement (22) aufweist, das verschieblich auf dem Vorsprung (9) des ersten Gleitelementes (8) sitzt und selbst über einen Vorsprung (31) verfügt, der senkrecht zum Vorsprung (9) des ersten Gleitelementes (9) steht und sich tangential zu einem gegebenen Bogen erstreckt, welcher konzentrisch zum Kreisprofil der gekrümmten Führung (4) angeordnet ist, und daß der Halter (7) ferner einen rechtwinkligen Bügel (32) aufweist, dessen erster Arm verschieblich am Vorsprung (31) des zweiten Gleitelementes (22) montiert ist, so daß der zweite Arm (47) angepaßt ist, die Bearbeitungseinheit aufzunehmen, die sich senkrecht zur gekrümmten Führung (4) erstreckt und auch zur Verschieberichtung des zweiten Gleitelementes (22).

2. Vorrichtung nach Anspruch 1, dadurch gekennzeichnet, daß der erste Arm (33) des rechtwinkligen Bügels (32) einen Zylinder (37) eines hydraulischen Kraftgerätes aufweist, der sich parallel der Achse des Vorsprunges (31) des zweiten Gleitelementes (22) erstreckt und der einen abgedichtet geführten, den Zylinder in zwei Kammern (39, 40) teilenden Kolben (38) aufweist, die mit einem Hydrauliksystem verbunden sind, wobei der Kolben (38) zum zweiten Gleitelement durch einen Zapfen (41) stationär gehalten wird, dessen Enden dem Kolben und dem zweiten Gleitelement zugeordnet sind, wobei der Zapfen, einen sich in Zylinderachsrichtung erstreckenden Längsschlitz (42) durchgreifend, in den Zylinder eingreift.

3. Vorrichtung nach Anspruch 2, dadurch gekennzeichnet, daß der zweite Arm (47) des rechtwinkligen Bügels (32) einen Zylinder (48) eines weiteren hidraulischen Kraftgerätes enthält, in dem ein abgedichtet geführter Kolben (49) angeordnet ist, der zweit mit einem Hydrauliksystem verbundene Kammern (50, 51) begrenzt und dem radial ein Zapfen (52) zugeordnet ist, der sich nach außen, einen Schlitz (53) des Zylinders durchgreifend aus diesem erstreckt, wobei mit dem Zapfen ein die Bearbeitungseinheit tragender Schlitten (58) verbunden ist.

4. Vorrichtung nach Anspruch 3, dadurch gekennzeichnet, daß zwecks Einstellung der Verschiebedistanz des Bügels (32) relativ zum zweiten Gleitelement (22) und des Schlittens (58) relativ zum zweiten Arm (47), Verschiebeanschläge vorgesehen sind, von denen jeder aus einem Paar von Gewindestangen (43, 44; 56, 57) gebildet ist, die in äußeren Rippen der Zylinder (37, 48) eingreifen wobei eine Rolle (45, 55), angeordnet zwischen benachbarten Enden der Gewindestangen, am Ende eines Zapfens (46, 54) angeordnet ist, der sich radial vom Kolben des betreffenden Zylinders aus erstreckt.

5. Vorrichtung nach Anspruch 3, dadurch gekennzeichnet, daß der die Bearbeitungseinheit tragende Schieber (58) eine im Querschnitt schwalbenschwanzartige Führung (61) aufweist, die sich kreisförmig erstreckt.

## Revendications

1. Dispositif de support d'outil monté de façon interchangeable sur une machine-outil pour positionner une unité d'usinage entraînée par rapport à une pièce, comprenant un élément de support (2, 3) présentant un guide (4) s'étendant au moins partiellement le long d'un profil courbe et un dispositif de maintien (7) pour l'unité d'usinage monté de façon coulissante sur ledit guide en vue de son positionnement le long dudit profil courbe, caractérisé en ce que le profil de guidage dudit guide (4) est un arc de cercle s'étendant sur une circonférence plus grande qu'un demi-cercle et en ce que ledit dispositif de maintien (7) comprend un premier élément coulissant (8) ayant une rainure (10) formant une mortaise engagée de façon coulissante avec ledit guide (4) et ayant un tenon (9) perpendiculaire à ladite rainure (10) et radial par rapport audit guide (4), un second élément coulissant (22) engagé de façon coulissante sur ledit tenon (9) dudit premier élément coulissant (8) et comportant lui-même un tenon (31) perpendiculaire au tenon (9) dudit premier élément coulissant (8) et tangentiel à un arc donné concentrique au profil circulaire du guide courbe (4), et un support (32) à angle droit, dont un premier bras est monté coulissant sur le tenon (31) dudit second élément coulissant (22) de façon que le second bras (47) destiné à supporter l'unité d'usinage s'étende perpendiculairement au guide courbe (4) et également à la direction de coulissement du second élément coulissant (22).

2. Dispositif selon la revendication 1, caractérisé en ce que le premier bras (33) dudit support (32) à angle droit porte un cylindre (37) d'un vérin hydraulique dont l'axe est parallèle à l'axe du tenon (31) dudit second élément coulissant (22), ledit cylindre comprenant un piston (38) guidé à l'intérieur de façon étanche pour diviser ledit cylindre en deux chambres (39, 40) reliées à un système hydraulique, ledit piston étant maintenu fixe par rapport audit second élément coulissant par une goupille (41), dont les extrémités opposées sont respectivement reliées audit piston et audit second élément coulissant, ladite goupille passant à travers une fente oblongue (42) dudit cylindre, et s'étendant dans la direction axiale dudit cylindre.

3. Dispositif selon la revendication 2, caractérisé en ce que ledit second bras (47) dudit support (32) à angle droit comporte un cylindre (48) d'un autre vérin hydraulique dans lequel un piston (49) peut coulisser de façon étanche, ledit piston définissant deux chambres (50, 51) reliées à un système hydraulique, ledit piston étant relié radialement à une goupille (52) faisant saillie vers l'extérieur à partir dudit cylindre à travers une fente (53) prévue dans ce dernier, un chariot (58) supportant l'unité opérationnelle étant associé à ladite goupille.

4. Dispositif selon la revendication 3, caractérisé en ce que afin de régler la course dudit support (32) par rapport audit second élément coulissant (22), et du chariot (58) par rapport audit second bras (47), on prévoit des butées dont chacune comporte une paire de tiges filetées (43, 44; 56, 57) engagées dans des nervures externes desdits cylindres (37, 48), un galet (45, 55) étant disposé entre les extrémités adjacentes desdites tiges et monté à l'extrémité d'un doigt (46, 54) faisant saillie radialement à partir dudit piston du cylindre respectif.

5. Dispositif selon la revendication 3, caractérisé en ce que ledit chariot (58) supportant ladite unité d'usinage a un guide (61) à section en queue d'aronde s'étendant en cercle.

FiG. 1

1

*FiG. 3*

*FiG. 2*

FiG. 4

*FiG. 5*

4

FIG. 6

**FiG. 7**

**FiG. 8**